(19) Europäisches Patentamt
European Patent Office
Office européen des brevets

(11) EP 1 366 131 B1

(12) EUROPEAN PATENT SPECIFICATION

(45) Date of publication and mention of the grant of the patent:
**08.02.2006 Bulletin 2006/06**

(21) Application number: **01272747.5**

(22) Date of filing: **14.12.2001**

(51) Int Cl.:
***C09J 175/04*** (2006.01) ***C08G 18/44*** (2006.01)
***C08G 18/10*** (2006.01)

(86) International application number:
**PCT/IB2001/002564**

(87) International publication number:
**WO 2002/053671 (11.07.2002 Gazette 2002/28)**

# (54) FILLED POLYURETHANE ADHESIVES BASED ON POLYCARBONATE POLYOLS SUITABLE FOR USE WITH ANTENNAS

GEFÜLLTE POLYURETHAN KLEBSTOFFE AUF BASIS POLYCARBONAT POLYOLE UND IHRE VERWENDUNG IN ANTENNENBAU

ADHESIFS DE POLYURETHANNE CHARGES A BASE DE POLYOLS DE POLYCARBONATE APTES A ETRE UTILISES SUR DES ANTENNES

(84) Designated Contracting States:
**AT BE CH CY DE DK ES FI FR GB GR IE IT LI LU MC NL PT SE TR**

(30) Priority: **30.12.2000 EP 00128756**
**03.01.2001 US 259229 P**

(43) Date of publication of application:
**03.12.2003 Bulletin 2003/49**

(73) Proprietor: **Sika Schweiz AG**
**8064 Zürich (CH)**

(72) Inventors:
- **BOSSHARD, Bernhard**
**CH-5453 Remetschwil (CH)**
- **SCHLUMPF, Michael**
**CH - 8953 Dietikon (CH)**

(74) Representative: **Isler, Jörg**
**c/o Sika Technology AG,**
**Tüffenwies 16**
**Postfach**
**8064 Zürich (CH)**

(56) References cited:
**EP-A- 0 210 859** **EP-A- 0 533 275**
**US-A- 5 061 749**

- **DATABASE WPI Section Ch, Week 199346 Derwent Publications Ltd., London, GB; Class A25, AN 1993-364973 XP002168358 & JP 05 270870 A (SEKISUI CHEM IND CO LTD) , 19 October 1993 (1993-10-19)**
- **DATABASE WPI Section Ch, Week 199011 Derwent Publications Ltd., London, GB; Class A23, AN 1990-079280 XP002168359 & JP 02 032185 A (KURARAY CO LTD), 1 February 1990 (1990-02-01)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

**Description**

CROSS REFERENCE TO RELATED APPLICATIONS

This application claims the priority of European patent application no. 00128756.4, filed December 30, 2000, and US provisional application no. 60/259229, filed January 3, 2001, the disclosures of which are incorporated herein by reference in their entirety.

TECHNICAL FIELD

The present invention concerns novel polyurethane (PUR)-adhesives that, due to good antenna-values (antenna impedance) and insulation resistance in combination with good mechanical properties and reduced blister formation tendency, are especially well suited for the direct glazing of car-panes with integrated antennas.

BACKGROUND ART

The requirements that adhesives for the direct glazing in vehicle manufacturing have to meet are steadily extended such that an adhesive has to fulfill several functions. One important additional property consists in that the adhesive for the assembly of vehicle panes with integrated antenna shall not affect the radio reception, and a further additional property consists in that contact corrosion shall be eliminated by the adhesive.

Today an adhesive that is suitable for the application in connection with antennas, i.e. an adhesive with good antenna impedance, and that has low conductivity can only be achieved by drastic reduction of the conductive fillers (e.g. carbon black). This, however, results in that the optimal adaptation of the rheological properties, in particular the non-sagging, as well as the achievement of good mechanical properties is limited, since the rheological as well as the mechanical properties depend from the kind and amount of the fillers.

The impedance problem on which the invention is based can be described as follows:

Panes carrying simultaneously antennas (antenna panes) comprise conductor structures that are in the panes or on the surface of the panes. Said antenna conductors are guided to the border of the panes, in order to be connected with the cables starting from said place. Said connections and bus bars at the borders of the panes can by chance or by intent come into contact with the adhesive used for the panes or said connections and bus bars can entirely be covered with said adhesive. By the adhesive, an additional impedance to the mass is formed, that is observed as blind component and active component. This results in a weaker received power. On the other hand, this also favours the oscillation transfer from the vehicle body to the antenna resulting in back ground noise.

A description of impedance is found in the Figure regarding "Antenna Impedance: Equivalent-Circuit Diagram of the Influence of the Adhesive", wherein the designations have the following meaning:

Z: impedance
K: adhesive
L: conductors
R: resistance
C: capacity (condenser)
P: parallel arrangement
S: series arrangement

The scheme presented in the Figure describes the basic situation. ($R_{KS}$ represents: resistance (R) caused by the adhesive, in a series arrangement as model).

The antenna is loaded with the impedance $Z_K$ caused by the adhesive and the impedance of the system itself (conductors) $Z_L$. By the additional impedance $Z_K$ caused by the adhesive, the available signal voltage is reduced. This results in a worse received power.

For the impedance two equivalent-circuit diagrams are possible that both are applied. The parallel arrangement with the factors $R_{KP}$ and $C_{KP}$, or the series arrangement with the factors $R_{KS}$ and $C_{KS}$.

Said models can be converted into one another.

The impedance thus can be described by a resistance (R) and a capacity (C). Resistance and capacity are dependent on the frequency.

Between said factors the following relations exist:

$$R_{KS} = \frac{R_{KP}}{1+\omega^2 C_{KP}^2 R_{KP}^2}$$

and

$$C_{KS} = \frac{1+\omega^2 C_{KP}^2 R_{KP}^2}{\omega^2 C_{KP} R_{KP}^2}$$

whereby ω represents the angular frequency (= 2π * frequency).

The two factors ($R_{KP}$ and $C_{KP}$) or the factors deduced from said factors are now calculated in the automobile producing industry and are determined as standard values for adhesives to be used on panes, in particular wind screens (direct glazing adhesives).

The goal of the present invention thus was to provide adhesives that, without any reduction of the amount of conductive fillers, guarantee good antenna impedance and low conductivity in combination with high mechanical properties, and that are therefore very well suited for the joining of base metals and direct glazing.

DISCLOSURE OF INVENTION

Hence, it is a general object of the invention to provide an adhesive that comprises at least one filler (filler comprising adhesive), said adhesive comprising a prepolymer consisting of a polycarbonate prepolymer with a polycarbonate polyol radical having an average equivalence weight (molecular weight per OH-group in the polyol) of about 100 to about 1000, in particular about 250 to about 750, more preferred about 250 to about 500, or from a prepolymer mixture containing a respective polycarbonate prepolymer.

Said compositions can be one-component (1C) compositions or two-component (2C) compositions, and said compositions are especially well suited for the application close to or on antennas.

MODES FOR CARRYING OUT THE INVENTION

The at least one filler comprising adhesives of the present invention comprise a prepolymer consisting of a polycarbonate prepolymer with a polycarbonate polyol radical having an average equivalence weight (molecular weight per OH-group in the polyol) of about 100 to about 1000, in particular about 250 to about 750, more preferred about 250 to about 500, or from a prepolymer mixture containing a respective polycarbonate prepolymer. Preferred polycarbonate prepolymers comprise a polycarbonate diol radical.

The inventive adhesives can be present as one-component or two-component compositions. They preferably contain in the prepolymer an amount of at least one polycarbonate diol radical of the following formula I:

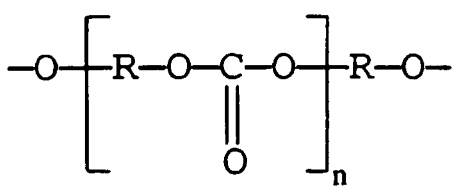

(I)

wherein R represents a linear or branched, saturated or unsaturated aliphatic radical, a saturated or unsaturated cycloaliphatic radical, an araliphatic radical or an aromatic radical, all radicals (as far as possible) with 3 to 10 carbon atoms, and

n = 1 to 8, preferably 2 to 5.

Preferred polycarbonate diols from which respective prepolymers result thus contain 1 to 8, preferably 2 to 5 polycarbonate groups and they had been obtained from linear or branched, saturated or unsaturated aliphatic, saturated or unsaturated cycloaliphatic, araliphatic aromatic diols with 3 to 10 carbon atoms, whereby saturated aliphatic diols are preferred.

Besides of the above mentioned diols also the use of small polyethers for the production of polycarbonate polyols is possible, however not preferred.

If polycarbonates resulting from short chain aliphatic diols are used, in particular diols with 3 to 6 carbon atoms, it is preferred that they are branched. Furthermore polycarbonate diols with average molecular weights of about 500 to about 1500, in particular about 500 to about 1000 are preferred, although longer chain polycarbonate diols lead to an improvement of the impedance, however to a minor extent.

For an improvement of the impedance it is furthermore essential that the prepolymers are incorporated into the network, and that they are not present in an inactive form, e.g. as precipitate. Particularly preferred prepolymers resulting from polycarbonates therefore are prepolymers with the above-mentioned characteristics.

The prepolymer in the one-component system is reactive with water (ambient humidity) and carries as end groups e.g. isocyanate groups, silane groups etc. Besides of the polycarbonate polyol radical that preferably comprises polycarbonate diol radicals, said prepolymer can contain further polyol radicals. Said polyol radicals preferably, in particular for one-component systems, stem from polyether polyols, in general polyether polyols with a functionality between 1.5 and 3 and a molecular weight between 400 and 20'000. Such further polyols are in general present in amounts of from 5 to 85 % by weight, preferably 10 to 75 % by weight, referred to the total weight of the adhesive.

It is particularly preferred that the polycarbonate diol radicals and the other polyol radicals in the prepolymer are present in separate molecules, that is not as mixed molecules that contain, in the same molecule, polycarbonate chains as well as e.g. polyether chains.

The amount of polycarbonate polyol radicals (referred to polycarbonate polyol) is from 0.1 to 45 % by weight, preferably 1 to 30 % by weight, particularly preferred 2 to 25 % by weight, referred to the whole amount of adhesive. The polycarbonate polyol used for the production of the prepolymer can be present in liquid or in solid form and it is preferably produced by transesterification of a low molecular, carbonate group containing compound such as e.g. diethyl carbonate, propylene carbonate etc., with a short chain diol such as e.g. 1,4-butanediol, 1,6-hexanediol etc.

The production of isocyanate groups containing PUR-prepolymers is known. It is usually performed at temperatures between 25°C and 100°C and possibly in the presence of a catalyst, e.g. dibutyl tin dilaurate. In most cases, said production is performed in about stoichiometric ratio, i.e. with preferably 1.5 to 2.1 isocyanate groups per H-active group in form of two or more isocyanate groups containing monomers.

The production of prepolymers terminated by silane groups can be made in an analogous way or by subsequent reaction of an isocyanate groups containing prepolymer with an aminosilane or a mercaptosilane.

The fillers contained in the adhesive system are preferably structure forming fillers, in particular conducting structure forming fillers. The fillers are usually present in total amounts of about 10 % to about 80 % by weight, preferably in total amounts of about 20 % to about 50 % by weight, and much preferably in total amounts of about 30 % to about 40 % by weight, whereby usually at least 3 % by weight, preferably 10 % by weight of the fillers are conductive fillers, in particular carbon black (all percentages are referred to the total weight of the adhesive). It is of course also possible that all fillers are conductive fillers, preferably carbon black, present in the amounts mentioned above for the total filler content.

Examples for fillers are chalks, kaolins, silicates, and in particular carbon black. Thixotropic fillers are aerosil, and soccal-chalks.

Carbon black is a preferred filler since it is cheap and has very good structure giving properties. Furthermore carbon black of which only a minor part is oxidized is characterized by a high adsorption capacity for $CO_2$ which is in particular essential for a blister-free curing of isocyanate-terminated prepolymers with water or ambient humidity, respectively. It is therefore a great advantage of the inventive adhesives that they can comprise large amounts of conductive carbon black.

The adhesives of the present invention that are based on polycarbonate prepolymers can also be present as two-component (2C) systems, in particular with diamine, diol and/or water in the curing component.

In particular for the curing with water, the $CO_2$-adsorption in carbon black containing 2C-systems is a very important advantageous additional effect.

A 2C-adhesive with a resin component containing polycarbonate diol and polyisocyanate as curing component, in particular diisocyanate, is also possible and leads to good results as long as the polycarbonate diol is the only present diol. In the present of further diols in the resin component, however, undesired chain extension reactions with e.g. polyetherpolyols may occur that lead to a product with less good impedance.

The adhesive systems of the present invention can consist of the prepolymer of the present invention and a filler, in particular a structure giving filler, or they can optionally contain a further prepolymer or usual additive and auxiliaries, for example plastizisers, catalysts, latent curing agents, adhesion promotors, dyes, pigments, UV-absorbing

agents, stabilizers, antioxidants, surface active additives, flame retarders, fungistatically active substances etc. The kind and amount of such additives is dependent from the use of the inventive compositions. During the production of the inventive compositions, it has to be assured that as few as possible humidity is introduced. All used components should be as free of water as possible.

Besides of good antenna impedance and high insulation resistance, the adhesive of the present invention also effects higher mechanical property values, in particular of the modules, as well as reduced blister formation tendency. A reasonable explanation seems to be that the polycarbonate polyole radical forms hydrogen bonds and therewith enhances the mechanical properties.

The compositions of the present invention, dependent on the requirements, can be used for joining, sealing or coating, and they are in particular applied in the vehicle manufacturing during the final assembly, in particular for the direct glazing of panes with integrated antenna. Since the adhesives of the present invention also effect high stiffening, they are also essential parts for the light-weight construction method in the vehicle construction.

Below, some examples shall be shown that further describe the invention. Said examples, however, shall not reduce the scope of the invention in any way.

**Examples:**

| **Raw materials used in the Examples:** | **obtained from:** |
|---|---|
| | |
| MDI-prepolymer based on polypropylene triol, (m.w. = ca. 4500 g/mol, NCO-content = 2.3%) | Sika, CH |
| Plastiziser (diisodecylphthalate) | BASF Schweiz AG, CH |
| Carbon black | Degussa, DE |
| Kaolin | Cell Chemie AG |
| Thixotropic agent (organic) | Sika, CH |
| Sn-catalyst (dibutyltindilaurate) | MG Chemag AG |
| Hydrophobic silic acid | Degussa, DE |
| MDI = Methylenediphenyldiisocyanate<br>The fillers were dried at 130°C, for 48 hours.<br>DE = Germany<br>CH = Switzerland | |

**Production of a prepolymer on NCO-basis**

A reaction vessel was provided with polyol and plastiziser, and the mixture was heated to 80°C. Isocyanate (NCO/OH-ratio = 2) was added and the composition was mixed under nitrogen until the NCO-content changed for less than 0.05 % within half an hour. For the determination of the NCO-content, dibutylamine solution was added to the sample, and a back-titration was formed with hydrochloric acid.

**Production of the adhesives**

Compositions and features of adhesives (formulated with the specific prepolymer according to the invention = PC-prep.) are shown in Table 1 in comparison with a reference composition. The production took place in such a way that all components were compounded to a lump-free adhesive paste in a vacuum mixer. The adhesive was then filled into cartridges in the usual way.

**Table 1: Information in percents by weight**

| **Formulation** | **Reference** | **1** | **2** | **3** |
|---|---|---|---|---|
| | | | | |

Table continued

| Formulation | Reference | 1 | 2 | 3 |
|---|---|---|---|---|
| **DIPD** | 11 | 11 | 11 | 11 |
| **MDI-prep.** | **40** | **38** | **35** | **30** |
| **Carbon black** | 15 | 15 | 15 | 15 |
| **Kaolin** | 20 | 20 | 20 | 20 |
| **Silicic acid** | 2 | 2 | 2 | 2 |
| **Thixotropic agent** | 10 | 10 | 10 | 10 |
| **PC-prep.** | **0** | **2** | **5** | **10** |
| **Catalyst** | 2 | 2 | 2 | 2 |
| DIDP = plastiziser<br>Thixo = thixotropic agent<br>PC-prep. = polycarbonate prepolymer with the following specification:<br>polycarbonatediol: 500 g/mole, based on dimethylcarbonate and 1,6-hexanediol, (about 50 % by weight of the PC-Prep.)<br>MDI: 250 g/mole (about 50 % by weight of PC-prep.) | | | | |

**Results**

| Adhesive | Insulation Resistance [Ω · cm] | εr’ | | | | εr’’ | | | |
|---|---|---|---|---|---|---|---|---|---|
| | | 1 MHz | 6 MHz | 100 MHz | 500 MHz | 1 MHz | 6 MHz | 100 MHz | 500 MHZ |
| **Reference** | $3 \cdot 10^7$ | 46.9 | 28.1 | 14.8 | 11.8 | 40.6 | 15.4 | 5.1 | 3.0 |
| **1** | $3 \cdot 10^8$ | 17.8 | 14.6 | 10.6 | 9.4 | 3.9 | 2.6 | 1.8 | 1.2 |
| **2** | $1 \cdot 10^9$ | 14.7 | 12.9 | 10.0 | 9.1 | 1.7 | 1.56 | 1.38 | 0.94 |
| **3** | $3 \cdot 10^9$ | 15.8 | 13.7 | 10.5 | 9.6 | 2.26 | 1.83 | 1.48 | 1.02 |

whereby the dielectricity constant is $\varepsilon r = \varepsilon r' - j \cdot \varepsilon r''$

| Adhesive | Elongation [%] | Tensile Strengt [MPa] | E-Modules [MPa] | | | |
|---|---|---|---|---|---|---|
| | | | 0.5-5% | 0.5-25% | 25-50% | 75-100% |
| **Reference** | 453 | 7.8 | 5.1 | 4.0 | 3.0 | 2.5 |
| **1** | 505 | 9.6 | 7.4 | 5.1 | 3.6 | 2.7 |
| **2** | 454 | 8.9 | 11.4 | 7.1 | 4.4 | 2.9 |
| **3** | 447 | 10.2 | 23.4 | 10.9 | 5.2 | 2.7 |

While there are shown and described presently preferred embodiments of the invention, it is to be distinctly understood that the invention is not limited thereto but may be otherwise variously embodied and practised within the scope of the following claims.

**Claims**

1. An adhesive comprising at least one filler, wherein said adhesive comprises a prepolymer selected from the group consisting of a polycarbonate prepolymer comprising a polycarbonate radical with a mean equivalence weight of 100 to 1000, in particular 250 to 750, more preferred 250 to 500, and a prepolymer mixture containing a respective polycarbonate prepolymer, or prepolymers comprising several polycarbonate prepolymers.

2. The adhesive of claim 1, which is a one-component adhesive.

3. The adhesive of claim 1, which is a two-component adhesive.

4. The adhesive of one of the preceding claims wherein the polycarbonate polyol radical is a polycarbonate diol radical.

5. The adhesive of claim 4 wherein the polycarbonate diol radical has the following formula I:

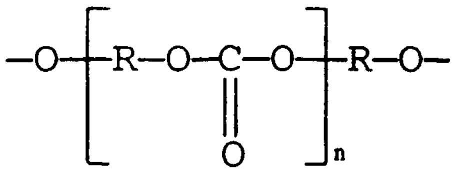

(I)

wherein R represents a linear or branched, saturated or unsaturated aliphatic radical, a saturated or unsaturated cycloaliphatic radical, an araliphatic radical, or an aromatic radical with 3 to 10 carbon atoms, and
n = 1 to 8, preferably 2 to 5.

6. The adhesive of claim 5, wherein the polycarbonate diol radical has a mean molecular weight of 500 to 1500, in particular 500 to 1000.

7. The adhesive of anyone of the preceding claims, wherein the end groups of the prepolymer as selected from the group consisting of isocyanate groups, silane groups and mixtures thereof.

8. Filler containing adhesive, wherein the polycarbonate prepolymer is present in an amount of from 0.1 to 75 % by weight, in particular 1 to 25 % by weight, and the filler is present in an amount of from 10 to 80 % by weight, in particular 20 to 50 % by weight, each referred to the whole weight of the adhesive.

9. The adhesive of anyone of the preceding claims, wherein the fillers comprise a structure forming agent, in particular a conducting structure forming agent, particularly preferred not or slightly oxidized carbon black.

10. The adhesive of claim 9, wherein the at least one conductive filler is present in amounts of from 3 to 80 % by weight, preferably 10 to 50 % by weight, much preferably 20 to 40 % by weight, each referred to the total weight of the adhesive.

11. The adhesive of anyone of the preceding claims, wherein the prepolymer is a prepolymer mixture that besides of polycarbonate prepolymer contains prepolymers based on non-polycarbonate polyols, in particular on polyether polyols.

12. The adhesive of claim 11, wherein the non-polycarbonate polyol has a functionality between 1.5 and 3 and an average molecular weight between 400 and 20'000.

13. The adhesive of claim 12, wherein the non-polycarbonate polyol is present in amounts of from 5 to 85 % by weight referred to the weight of the adhesive, preferably 10 to 75 % by weight.

14. Method for the production of an adhesive according to anyone of the preceding claims, wherein a polycarbonate polyole radical containing polycarbonate prepolymer or a prepolymer mixture containing such a polycarbonate prepolymer are mixed with at least one filler under water-free conditions.

**15.** Method according to claim 14, wherein a prepolymer mixture is used that contains prepolymers with polyetherpolyole radicals, in particular polyether diol radicals.

**16.** Method for direct glassing of antenna containing panes wherein a filler containing adhesive according to anyone of claims 1 to 13 is applied in close proximity or on parts of the antenna.

**17.** Use of a filler containing adhesive according to anyone of claims 1 to 13 in the close proximity or on parts of the antenna.

**18.** Use of a polycarbonate prepolymer as described in one of claims 1 to 13 in an adhesive suitable for use with antennas.

**Patentansprüche**

**1.** Klebstoff, umfassend mindestens ein Füllmaterial, wobei der Klebstoff ein Präpolymer, ausgewählt aus der Gruppe bestehend aus einem Polycarbonatpräpolymer, umfassend einen Polycarbonatrest mit einem mittleren Äquivalenzgewicht von 100 bis 1000, insbesondere 250 bis 750, stärker bevorzugt 250 bis 500, und eine ein betreffendes Polycarbonatpräpolymer enthaltende Präpolymermischung oder mehrere Polycarbonatpräpolymere umfassende Präpolymere, umfasst.

**2.** Klebstoff nach Anspruch 1, wobei es sich um einen Ein-Komponenten-Klebstoff handelt.

**3.** Klebstoff nach Anspruch 1, wobei es sich um einen Zwei-Komponenten-Klebstoff handelt.

**4.** Klebstoff nach einem der vorhergehenden Ansprüche, wobei der Polycarbonatpolyolrest - ein Polycarbonatdiolrest ist.

**5.** Klebstoff nach Anspruch 4, wobei der Polycarbonatdiolrest die folgende Formel I besitzt:

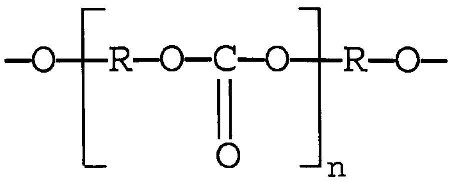

(I)

wobei R für einen linearen oder verzweigten, gesättigten oder ungesättigten aliphatischen Rest, einen gesättigten oder ungesättigten cycloaliphatischen Rest, einen araliphatischen Rest oder einen aromatischen Rest mit 3 bis 10 Kohlenstoffatomen steht und n = 1 bis 8, vorzugsweise 2 bis 5 ist.

**6.** Klebstoff nach Anspruch 5, wobei der Polycarbonatdiolrest ein mittleres Molekulargewicht von 500 bis 1500, insbesondere 500 bis 1000 besitzt.

**7.** Klebstoff nach mindestens einem der vorhergehenden Ansprüche, wobei die Endgruppen des Präpolymers ausgewählt sind aus der Gruppe bestehend aus Isocyanatgruppen, Silangruppen und Mischungen davon.

**8.** Füllmaterial enthaltender Klebstoff, wobei das Polycarbonatpräpolymer in einer Menge von 0,1 bis 75 Gew.-%, insbesondere 1 bis 25 Gew.-%, vorliegt und das Füllmaterial in einer Menge von 10 bis 80 Gew.-%, insbesondere 20 bis 50 Gew.-%, vorliegt, jeweils bezogen auf das Gesamtgewicht des Klebstoffs.

**9.** Klebstoff nach mindestens einem der vorhergehenden Ansprüche, wobei die Füllmaterialien ein Struktur bildendes Mittel, insbesondere eine leitende Struktur bildendes Mittel, besonders bevorzugt nicht oder leicht oxidierten Russ umfassen.

**10.** Klebstoff nach Anspruch 9, wobei das mindestens eine leitende Füllmaterial in Mengen von 3 bis 80 Gew.-%, vorzugsweise 10 bis 50 Gew.-%, stark bevorzugt 20 bis 40 Gew.-%, vorliegt, jeweils bezogen auf das Gesamtgewicht des Klebstoffs.

**11.** Klebstoff nach mindestens einem der vorhergehenden Ansprüche, wobei das Präpolymer eine Präpolymermischung ist, welche neben Polycarbonatpräpolymer Präpolymere auf Basis von Nicht-Polycarbonatpolyolen, insbesondere auf Basis von Polyetherpolyolen, enthält.

**12.** Klebstoff nach Anspruch 11, wobei das Nicht-Polycarbonatpolyol eine Funktionalität zwischen 1,5 und 3 und ein mittleres Molekulargewicht zwischen 400 und 20.000 besitzt.

**13.** Klebstoff nach Anspruch 12, wobei das Nicht-Polycarbonatpolyol in Mengen von 5 bis 85 Gew.-%, bezogen auf das Gewicht des Klebstoffs, vorzugsweise 10 bis 75 Gew.-%, vorliegt.

**14.** Verfahren zur Herstellung eines Klebstoffs gemäß mindestens einem der vorhergehenden Ansprüche, wobei ein Polycarbonatpolyolrest enthaltendes Polycarbonatpräpolymer oder eine ein solches Polycarbonatpräpolymer enthaltende Präpolymermischung mit mindestens einem Füllmaterial unter wasserfreien Bedingungen vermischt wird.

**15.** Verfahren nach Anspruch 14, wobei eine Präpolymermischung verwendet wird, welche Präpolymere mit Polyetherpolyolresten, insbesondere Polyetherdiolresten, verwendet wird.

**16.** Verfahren zur direkten Verglasung von eine Antenne enthaltenden Glasscheiben, wobei ein Füllmaterial enthaltender Klebstoff nach mindestens einem der Ansprüche 1 bis 13 in unmittelbarer Nähe oder auf Teilen der Antenne aufgebracht wird.

**17.** Verwendung eines Füllmaterial enthaltenden Klebstoffs gemäß mindestens einem der Ansprüche 1 bis 13 in unmittelbarer Nähe oder auf Teilen der Antenne.

**18.** Verwendung eines Polycarbonatpräpolymers, wie in einem der Ansprüche 1 bis 13 beschrieben, in einem Klebstoff, der für die Verwendung mit Antennen geeignet ist.

**Revendications**

**1.** Adhésif comprenant au moins une matière de remplissage, ledit adhésif comprenant un prépolymère sélectionné parmi le groupe comprenant un prépolymère polycarbonate qui comprend un radical polycarbonate présentant un poids équivalent moyen de 100 à 1000, en particulier de 250 à 750, de manière plus préférée de 250 à 500, et un mélange de prépolymères qui contient un prépolymère polycarbonate respectif ou des prépolymères comprenant plusieurs prépolymères polycarbonate.

**2.** Adhésif selon la revendication 1, qui est un adhésif monocomposant.

**3.** Adhésif selon la revendication 1, qui est un adhésif bicomposant.

**4.** Adhésif selon l'une des revendications précédentes, dans lequel le radical polycarbonate-polyol est un radical polycarbonatediol.

**5.** Adhésif selon la revendication 4, dans lequel le radical polycarbonatediol présente la formule I suivante :

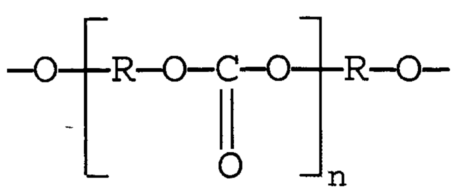

(I)

dans laquelle R représente un radical aliphatique linéaire ou branché, saturé ou insaturé, un radical cycloaliphatique saturé ou insaturé, un radical araliphatique ou un radical aromatique présentant 3 à 10 atomes de carbone, et

n = 1 à 8, de préférence 2 à 5.

**6.** Adhésif selon la revendication 5, dans lequel le radical polycarbonatediol présente un poids moléculaire moyen de 500 à 1500, en particulier de 500 à 1000.

**7.** Adhésif selon l'une quelconque des revendications précédentes, dans lequel on sélectionne les groupements d'extrémité du prépolymère parmi le groupe comprenant des groupements isocyanate, des groupements silane et des mélanges de ceux-ci.

**8.** Adhésif contenant une matière de remplissage, dans lequel le prépolymère polycarbonate est présent en une quantité allant de 0,1 à 75% en poids, en particulier de 1 à 25% en poids, et la matière de remplissage est présente en une quantité allant de 10 à 80% en poids, en particulier de 20 à 50% en poids, chacune se rapportant au poids total de l'adhésif.

**9.** Adhésif selon l'une quelconque des revendications précédentes, dans lequel les matières de remplissage comprennent un agent de formation d'une structure, en particulier un agent de formation d'une structure conductrice, de manière particulièrement préférée du noir de carbone inoxydé ou légèrement oxydé.

**10.** Adhésif selon la revendication 9, dans lequel la au moins une matière de remplissage conductrice est présente en des quantités allant de 3 à 80% en poids, de préférence de 10 à 50% en poids, mieux encore de 20 à 40% en poids, chacune se rapportant au poids total de l'adhésif.

**11.** Adhésif selon l'une quelconque des revendications précédentes, dans lequel le prépolymère est un mélange de prépolymères qui, outre le prépolymère polycarbonate, contient des prépolymères à base de polyols non polycarbonates, en particulier à base de polyéther-polyols.

**12.** Adhésif selon la revendication 11, dans lequel le polyol non polycarbonate présente une fonctionnalité d'entre 1,5 et 3 et un poids moléculaire moyen d'entre 400 et 20 000.

**13.** Adhésif selon la revendication 12, dans lequel le polyol non polycarbonate est présent en des quantités allant de 5 à 85% en poids par rapport au poids de l'adhésif, de préférence de 10 à 75% en poids.

**14.** Procédé de production d'un adhésif selon l'une quelconque des revendications précédentes, dans lequel on mélange un prépolymère polycarbonate contenant un radical polycarbonate-polyol, ou un mélange de prépolymères contenant un tel prépolymère polycarbonate, avec au moins une matière de remplissage dans des conditions exemptes d'eau.

**15.** Procédé selon la revendication 14, dans lequel on utilise un mélange de prépolymères qui contient des prépolymères avec des radicaux polyéther-polyol, en particulier des radicaux polyétherdiol.

**16.** Procédé de pose directe de vitrages contenant une antenne, dans lequel on applique un adhésif contenant une matière de remplissage selon l'une quelconque des revendications 1 à 13 à proximité immédiate ou sur des parties de l'antenne.

**17.** Utilisation d'un adhésif contenant une matière de remplissage selon l'une quelconque des revendications 1 à 13 à proximité immédiate ou sur des parties de l'antenne.

**18.** Utilisation d'un prépolymère polycarbonate tel que décrit dans l'une des revendications 1 à 13, dans un adhésif approprié à une utilisation avec des antennes.

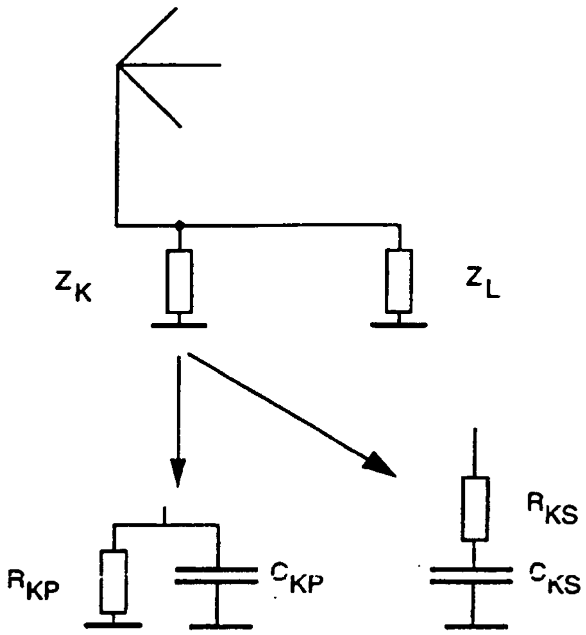


Figure